(19) Europäisches Patentamt / European Patent Office / Office européen des brevets

(11) **EP 2 268 522 B1**

(12) **EUROPÄISCHE PATENTSCHRIFT**

(45) Veröffentlichungstag und Bekanntmachung des Hinweises auf die Patenterteilung:
**05.09.2012 Patentblatt 2012/36**

(21) Anmeldenummer: **09732895.9**

(22) Anmeldetag: **24.03.2009**

(51) Int Cl.:
*B60W 10/02* (2006.01)      *B60W 10/06* (2006.01)
*B60W 10/08* (2006.01)      *B60W 20/00* (2006.01)
*B60W 40/12* (2012.01)      *F16D 48/06* (2006.01)

(86) Internationale Anmeldenummer:
**PCT/EP2009/053442**

(87) Internationale Veröffentlichungsnummer:
**WO 2009/127502 (22.10.2009 Gazette 2009/43)**

(54) **SCHLUPFBETRIEB EINER KUPPLUNG BEI HYBRIDANTRIEBSVORRICHTUNGEN**

SLIP OPERATION OF A CLUTCH IN HYBRID DRIVE DEVICES

FONCTIONNEMENT EN PATINAGE D UN ACCOUPLEMENT SUR DES DISPOSITIFS PROPULSEURS HYBRIDES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **14.04.2008 DE 102008001144**

(43) Veröffentlichungstag der Anmeldung:
**05.01.2011 Patentblatt 2011/01**

(73) Patentinhaber: **Robert Bosch GmbH
70442 Stuttgart (DE)**

(72) Erfinder: **FALKENSTEIN, Jens-Werner
73434 Aalen (DE)**

(56) Entgegenhaltungen:
DE-A1- 10 053 110      DE-A1- 10 204 981
DE-A1- 10 308 692      DE-A1- 19 721 298
DE-A1- 19 915 207      DE-A1-102006 042 922

## Beschreibung

Die Erfindung betrifft ein Verfahren zum Betreiben einer Hybridantriebsvorrichtung eines Kraftfahrzeugs, die zumindest zwei unterschiedliche Antriebsaggregate, insbesondere eine elektrische Maschine und eine Brennkraftmaschine, und eine Kupplung aufweist, wobei die Antriebsaggregate mittels der Kupplung wirkverbindbar sind. Die Erfindung betrifft ferner eine entsprechende Vorrichtung.

## Stand der Technik

Bei Hybrid-Kraftfahrzeugen besteht der Antriebsstrang meist aus einer Brennkraftmaschine und mindestens einer elektrischen Maschine. Bei einem parallelhybridischen Antriebsstrang kann die Brennkraftmaschine mit der elektrischen Maschine über eine von einer Steuereinrichtung beeinflussbaren Kupplung gekuppelt werden. Daraus ergibt sich neben den Betriebsarten hybridisches Fahren, Boostbetrieb und Rekuperationsbetrieb auch eine Betriebsart, die rein elektrisches Fahren ermöglicht. Ein Start der Brennkraftmaschine kann während des elektrischen Fahrens beispielsweise dann erforderlich sein, wenn ein Fahrer mehr Antriebsleistung anfordert, als die elektrische Maschine erzeugen kann oder wenn der Energieinhalt eines elektrischen Energiespeichers für die elektrische Maschine zu stark abfällt. Dieser Start erfolgt meist durch ein Anschleppen der Brennkraftmaschine mittels der elektrischen Maschine. Mit der Brennkraftmaschine und der elektrischen Maschine liegen zwei Momentenquellen vor, die bei geschlossener Kupplung gemeinsam ein Gesamtantriebsmoment erzeugen, was als hybridisches Fahren bezeichnet wird. Eine eindeutige Erfassung, ob die Brennkraftmaschine nach dem Anschleppen durch die elektrische Maschine auch fehlerfrei gestartet ist, also ob Verbrennungen erfolgen, ist nicht immer möglich. Insbesondere bei geringen Momentenanforderungen an die Brennkraftmaschine kann dies nicht sicher aus typischerweise zur Verfügung stehenden Signalen, beispielsweise aus Steuergeräten, abgeleitet werden. Eine Messung des von der Brennkraftmaschine erzeugten Drehmoments oder des von der Brennkraftmaschine und der elektrischen Maschine gemeinsam erzeugten Gesamtantriebsmoments erfolgt aus wirtschaftlichen Gründen meistens nicht.

Es ist bekannt, die Kupplung zur Diagnose oder Adaption der Kupplung in einem Schlupfbetrieb zu betreiben, vgl. beispielsweise , DE 197 21 298 A, DE 199 15 207 A oder DE 100 53 110 A.

## Offenbarung der Erfindung

Die Erfindung wird definiert durch die unabhängigen Ansprüche.

Aufgrund des erfindungsgemäßen Verfahrens ist vorgesehen, dass die Kupplung in einem Diagnose- und/oder Adaptionsbetrieb mit einem Schlupf betrieben wird. Der Schlupf entkuppelt die Antriebsaggregate teilweise voneinander und zeichnet sich durch eine Drehzahldifferenz an der Kupplung aus, das heißt dass die Antriebsaggregate trotz einer Wirkverbindung mit einer Drehmomentenübertragung zueinander unterschiedliche und variierende Drehzahlen annehmen können. Die Drehzahlen der Antriebsaggregate sind abhängig von an den Antriebsaggregaten anliegenden und/oder erzeugten Drehmomenten, weshalb ein unabhängiger Drehzahlanstieg eines Antriebsaggregats eine Drehmomentenerzeugung dieses Antriebsaggregates anzeigt, wie dies bei einem Startvorgang einer Brennkraftmaschine der Fall ist. Der Diagnosebetrieb ist insbesondere dafür vorgesehen, einen fehlerfreien Betrieb der Antriebsaggregate durch Überwachung deren Drehzahlen zu erkennen und Fehler im Betrieb der entsprechenden Komponenten der Hybridantriebsvorrichtung auf die gleicher Weise zu diagnostizieren. Ferner soll der Adaptionsbetrieb eine Anpassung der Betriebszustände der einzelnen Komponenten auf gewünschte Weise ermöglichen, indem der Schlupf an der Kupplung vorgegeben wird, wodurch sich Drehmomente an den Antriebsaggregaten einstellen lassen. Damit kann die Drehmomentenerzeugung qualitativ bestimmt und/oder vorgegeben werden.

Nach einer vorteilhaften Weiterbildung der Erfindung ist vorgesehen, dass der Schlupf gesteuert und/oder geregelt wird. Durch die Steuerung und/oder Regelung insbesondere einer Anpresskraft einer Ansteuervorrichtung der Kupplung, welche die Kupplung schließt oder öffnet, kann der Schlupf auf ein bestimmtes, definiertes Maß eingestellt werden. Dieses definierte Maß kann als Bezugspunkt für die Diagnose und/oder die Anpassung der Betriebszustände einzelner Komponenten und/oder der gesamten Hybridantriebsvorrichtung dienen. Auf diese Weise wird die Diagnose und/oder die Anpassung optimiert, da die Überwachung und/oder Vorgabe der Drehzahl nicht nur qualitativ, sondern auch quantitativ erfolgen kann.

Nach einer Weiterbildung der Erfindung ist vorgesehen, dass der Schlupf mittels der Vorgabe eines maximalen Haftmoments der Kupplung und/oder eines Solldrehmoments mindestens eines der Antriebsaggregate gesteuert und/oder geregelt wird. Das maximale Haftmoment gibt an, welches Drehmoment maximal von der Kupplung getragen wird, wenn die Kupplung zu schlupfen beginnt. Aus dem maximalen Haftmoment wird in der Ansteuervorrichtung die entsprechende Anpresskraft für Kupplung ermittelt. Wird die Kupplung schlupfend betrieben, so wird stets nur das maximale Haftmoment übertragen und jedes darüberhinaus gehende an die Kupplung geführte Drehmoment erzeugt den Schlupf. Je größer die Differenz zwischen dem maximalen Haftmoment und dem zugeführten Drehmoment ist, desto schneller erhöht sich der Schlupf, weshalb eine Verwendung von Solldrehmomenten als Stellgrößen vorteilhaft ist. Auf diese Weise wird insbesondere die qualitative Überwachung und/oder Vorgabe von Drehmomenten ermöglicht.

Nach einer Weiterbildung der Erfindung ist vorgesehen, dass der Schlupf mittels einer Drehzahl von mindestens einem der Antriebsaggregate gesteuert und/oder geregelt wird. Dabei wird aus der Drehzahl ein maximales Haftmoment und/oder ein Solldrehmoment ermittelt. Bei einer Kupplung, die mit Schlupf betrieben wird, kann das aktuell übertragene Drehmoment von einer Steuereinrichtung nur bis zu einer bestimmten Genauigkeit über die direkte Vorgabe eines maximalen Haftmoments eingestellt und/oder begrenzt werden, da nichtlineare Einflüsse wie variierende Reibkoeffizienten der Kupplungsbeläge, hydraulische Ungenauigkeiten in einer Ansteuerung der Kupplung, mechanische Ungenauigkeiten in der Ansteuerung der Kupplung und/oder Signallaufzeiten nur schwer nachzuvollziehen sind. Die Ungenauigkeiten der Ansteuerung der Kupplung wirken sich insbesondere auf den Fahrkomfort wie beispielsweise beim Starten und Stoppen einer Brennkraftmaschine ungünstig aus. Im Gegensatz dazu lassen sich die Drehzahlen der Antriebsaggregate einfach und genau erfassen. Aus diesem Grund ist eine Regelung des Schlupfes mittels der Drehzahl von mindestens einem der Antriebsaggregate, vorzugsweise von zwei Antriebsaggregaten, vorteilhaft. Insbesondere eine Drehzahldifferenz von mindestens zwei Antriebsaggregaten, die auf die Kupplung wirken, kann als hochgenaues Maß für eine Vorgabe eines maximalen Haftmoments und damit einer Anpresskraft verwendet werden.

Nach einer Weiterbildung der Erfindung ist vorgesehen, dass jedes der Antriebsaggregate ein Drehmoment erzeugt. Dieser Betriebszustand wird als hybridischer Betrieb bezeichnet. In diesem Betriebszustand lässt sich der Schlupf sehr genau einstellen, da die Antriebsaggregate ein bekanntes Drehmoment erzeugen, welche als Bezugspunkte für die Größe des Schlupfes dienen können.

Nach einer Weiterbildung der Erfindung ist vorgesehen, dass eine Diagnose und/oder Adaption anhand der Drehzahlen von mindestens einem der Antriebsaggregate, anhand des Schlupfes der Kupplung und/oder anhand einer Differenzdrehzahl an der Kupplung erfolgt. Eine Auswertung der Drehzahlen und des Schlupfes ermöglichen es in einer Hybridantriebantriebsvorrichtung Aussagen über den Betriebszustand der jeweiligen Komponenten - Antriebsaggregate und Kupplung — zu treffen. Dies begründet sich auf bekannte Wechselwirkungen der einzelnen Komponenten untereinander. Wird beispielsweise das Solldrehmoment eines Antriebsaggregats erhöht, so kann sich die Drehzahl dieses Antriebsaggregats aufgrund des Schlupfes erhöhen, ohne einen Einfluss auf ein anderes der Antriebsaggregate zu nehmen. Diese teilweise Entkopplung der Antriebsaggregate zueinander über die Kupplung führt dazu, dass die Drehzahlen der einzelnen Antriebsaggregate und damit die Differenzdrehzahl an der Kupplung in sehr hohem Maße von der Eigendynamik der Antriebsaggregate und der Kupplung abhängen, sodass ein gezielter Eingriff in eine der Komponenten eine Veränderung der Zustände bewirkt, welche dem gezielten Eingriff eindeutig zugeordnet werden kann. Auf diese Weise können unterschiedlichste Arten der Diagnose für alle beteiligten Komponenten durchgeführt werden.

Nach einer Weiterbildung der Erfindung ist vorgesehen, dass eine Diagnose einer Drehmomenterzeugung eines der Antriebsaggregate anhand einer Drehzahländerung des Antriebsaggregats erfolgt. Um eine Drehmomenterzeugung des Antriebsaggregats zu erkennen, wird die Drehzahl des Antriebsaggregats ausgewertet, da sie sich bei konstantem maximalem Haftmoment nur dann erhöht, wenn das Antriebsaggregat ein eigenes Drehmoment erzeugt. Liegt ein Anstieg der Drehzahl vor, so liegt eine Drehmomentenerzeugung vor, wobei die Geschwindigkeit des Drehzahlanstiegs ein Maß für das erzeugte Drehmoment ist.

Nach einer Weiterbildung der Erfindung ist vorgesehen, dass für eine Diagnose eines Startvorgangs eines der Antriebsaggregate das während der Diagnose erkannte und/oder ermittelte Drehmoment des Antriebsaggregats verwendet wird. Die Diagnose des Startvorgangs des einen Antriebsaggregats verläuft über die Drehzahl des anderen Antriebsaggregats, wobei anhand dieser Drehzahl Rückschlüsse auf das erzeugte Drehmoment möglich sind, welche wiederum Rückschlüsse darauf zulassen, inwieweit ein Startvorgang eines Antriebsaggregats vorhanden und erfolgreich ist.

Nach einer Weiterbildung der Erfindung ist vorgesehen, dass ein Ende des Startvorgangs eines der Antriebsaggregate anhand des erkannten und/oder ermittelten Drehmoments detektiert wird. Der Startvorgang eines Antriebsaggregats ist je nach Bauform mit einer charakteristischen Drehmomenterzeugung verbunden, welche mit dem erkannten und/oder ermittelten Drehmoment verglichen werden kann, um ein Ende des Startvorgangs zu detektieren.

Nach einer Weiterbildung der Erfindung ist vorgesehen, dass in einem Diagnose und/oder Adaptionsbetrieb dynamische Massenkräfte mindestens einer der Antriebsaggregate und/oder der Kupplung ausgeglichen werden. Dynamische Massenkräfte treten bei Komponenten während Drehzahländerungen auf. Bei Beschleunigung eines der Antriebsaggregate muss ein Teil des von dem Antriebsaggregat erzeugten Drehmoments für die Beschleunigung der eigenen Trägheit aufgewendet werden, das heißt, wird ein Solldrehmoment gefordert und das Antriebsaggregat beschleunigt seine Drehzahl, so erzeugt das Antriebsaggregat das geforderte Drehmoment, aber nur ein Teil des erzeugten Drehmoments wird an die Kupplung übertragen. Durch Ausgleichen der für Berechnungen erfassten Werte an den Antriebsaggregaten und der Kupplung wird ermöglicht, dass sowohl bei konstanter Drehzahl als auch während einer Drehzahländerung hochgenaue Diagnosen durchgeführt werden können. Ferner wird ermöglicht zu prüfen, ob die Stellgrößen durch die Komponenten korrekt gestellt werden, indem zwischen den Komponenten Drehmomentbilanzen aufgestellt werden. Diese Bilanzen werden anhand der dynamischen Massenkräfte ausgeglichen. Aufgrund der Ergebnisse werden Ansteuerungen der Komponenten und/oder die Regelung korrigiert beziehungsweise adaptiert, sodass eine sehr hohe Regelgüte und Regelgenauigkeit in allen Betriebsbereichen der Antriebsaggregate und der Kupplung während des Diagnose- und/oder Adaptionsbetriebs erreicht wird.

Nach einer Weiterbildung der Erfindung ist vorgesehen, dass auf Basis des Schlupfs und des maximalen Haftmoments das Drehmoment von mindestens einem der Antriebsaggregate gesteuert und/oder geregelt wird. Eine Drehmomenterfassung wird aus wirtschaftlichen Gründen meist nicht eingesetzt. Dies kann mittels einer Vorgabe des maximalen Haftmoments und der Überwachung des daraus resultierenden Schlupfes, beispielsweise anhand der Drehzahlen, realisiert werden. Dabei kann der Wert des an der Kupplung anliegenden Drehmoments dadurch ermittelt werden, dass bei einem bestimmten maximalen Haftmoment die Kupplung von einem Haftbetrieb in einen schlupfenden Betrieb übergeht, wenn das maximale Haftmoment von den Antriebsaggregaten überschritten wird. Alternativ kann das anliegende Drehmoment auch dadurch ermittelt werden, dass die Kupplung aus einem schlupfenden Betrieb in einen Haftbetrieb über geht, sobald das maximale Haftmoment unterschritten wird. Damit lassen sich Veränderungen der Drehmomente, die an die Kupplung geführt werden und damit von den Antriebsaggregaten kommen über eine Veränderung quantitativ ermitteln.

Nach einer Weiterbildung der Erfindung ist vorgesehen, dass die Drehmomente der Antriebsaggregate zu einem Gesamtantriebsmoment zusammengeführt werden, welches an den Antriebsrädern des Kraftfahrzeugs wirkt. In dieser Ausgestaltung der Erfindung werden die von den Antriebsaggregaten erzeugten Drehmomente über die Kupplung zusammengeführt, um in dem hybridischen Betriebszustand das Fahrzeug gemeinsam anzutreiben. Dieser Betriebszustand wird als hybridisches Fahren bezeichnet.

Nach einer Weiterbildung der Erfindung ist vorgesehen, dass bei einem Übergang der Kupplung in oder aus dem Diagnose- und/oder Adaptionsbetrieb das Gesamtantriebsmoment erhalten bleibt. Durch entsprechende Regelung wird erreicht, dass der Übergang in oder aus dem Diagnose- und/oder Adaptionsbetrieb ohne Auswirkung auf das Gesamtantriebsmoment vollzogen wird. Dies erhöht den Fahrkomfort, da ein Übergang für einen Fahrer nicht spürbar ist, weshalb der Diagnose- und/oder Adaptionsbetrieb in allen Betriebszuständen eingesetzt werden kann. Um dies zu erreichen, wird das für die Steuerung und/oder Regelung des Schlupfes benötigte zusätzliche Drehmoment gemeinsam von mindestens zwei Antriebsaggregaten aufgebracht, wobei diese jeweils den Betrag des zusätzlichen Drehmoments zueinander gegensinnig auf die Kupplung aufbringen. Die gegensinnige Aufschaltung des benötigten Drehmoments bedeutet, dass sich die zusätzlich erzeugten Drehmomente bezüglich des Gesamtantriebsmoments gegenseitig aufheben, weshalb das Gesamtantriebsmoment durch die Aufschaltung nicht verändert wird.

Nach einer Weiterbildung der Erfindung ist vorgesehen, dass die Kupplung in einem Normalbetrieb der Hybridantriebsvorrichtung in einem Diagnose- und/oder Adaptionsbetrieb betrieben wird. Dies ist insbesondere dann möglich, wenn das Gesamtantriebsmoment durch den Diagnose- und/oder Adaptionsbetrieb nicht verändert wird. Auf diese Weise sind Diagnosen und Adaptionen nicht nur auf Wartungsintervalle beschränkt, sondern können sofort bei Bedarf durchgeführt werden.

Ferner ist eine Hybridantriebsvorrichtung eines Kraftfahrzeugs, insbesondere zur Durchführung des Verfahrens nach einem oder mehreren vorhergehenden Ansprüchen, vorgesehen, die zumindest zwei unterschiedliche Antriebsaggregate, insbesondere eine elektrische Maschine und eine Brennkraftmaschine, und eine Kupplung aufweist, wobei die Antriebsaggregate mittels der Kupplung wirkverbindbar sind. Dabei ist vorgesehen, dass die Kupplung in einem Diagnose- und/oder Adaptionsbetrieb eine Schlupfkupplung bildet. Die Schlupfkupplung ermöglicht bei einer Wirkverbindung der Antriebsaggregate mittels der Kupplung eine Drehzahldifferenz zwischen den Antriebsaggregaten aufrecht zu erhalten, wobei ein Drehmoment übertragen wird.

Weiter ist eine Steuereinrichtung vorgesehen für eine Hybridantriebsvorrichtung eines Kraftfahrzeugs, insbesondere zur Durchführung des Verfahrens nach einem oder mehreren vorhergehenden Ansprüchen, wobei die Hybridantriebsvorrichtung zumindest zwei unterschiedliche Antriebsaggregate, insbesondere eine elektrische Maschine und eine Brennkraftmaschine, sowie eine mittels von der Steuereinrichtung gelieferten Steuersignale betätigte Kupplung aufweist, und die Antriebsaggregate mittels der Kupplung wirkverbindbar sind. Hierbei ist vorgesehen, dass die Steuereinrichtung derart ausgebildet ist, dass sie in einem Diagnose- und/oder Adaptionsbetrieb Steuersignale zum Betreiben der Kupplung in einem Schlupfbetrieb erzeugt. Die Steuereinrichtung ist vorzugsweise als Steuergerät ausgeführt, das der Kupplung zugeordnet ist. Das Steuergerät kann dabei ein gesondertes Steuergerät für die Kupplung sein oder alternativ ein anderes Steuergerät in dem Kraftfahrzeug sein, welches neben Steuersignalen für die Kupplung auch Steuersignale für andere Kraftfahrzeugkomponenten erzeugt.

Schließlich ist ein Kraftfahrzeugaggregat mit einer Steuereinrichtung (10) und einer Hybridantriebsvorrichtung (1) nach Anspruch 16 vorgesehen.

**Kurze Beschreibung der Zeichnungen**

Die Zeichnungen veranschaulichen die Erfindung anhand eines Ausführungsbeispiels, und zwar zeigt:

Figur 1    einen schematischen Aufbau einer Hybridantriebsvorrichtung,

Figur 2    ein Strukturbild eines Ausführungsbeispiels für das erfindungsgemäße Verfahren,

Figur 3    Simulationsergebnisse des Ausführungsbeispiels für ein binäres Schlupfsignal,

Figur 4    Simulationsergebnisse des Ausführungsbeispiels für einen Verlauf von Drehmomenten,

Figur 5    Simulationsergebnisse des Ausführungsbeispiels für Drehzahlen zweier Antriebsaggregate und

Figur 6    Simulationsergebnisse des Ausführungsbeispiels für die Drehzahlen bei einer zusätzlichen Ausschaltung eines Vorsteuermoments.

**Ausführungsform(en) der Erfindung**

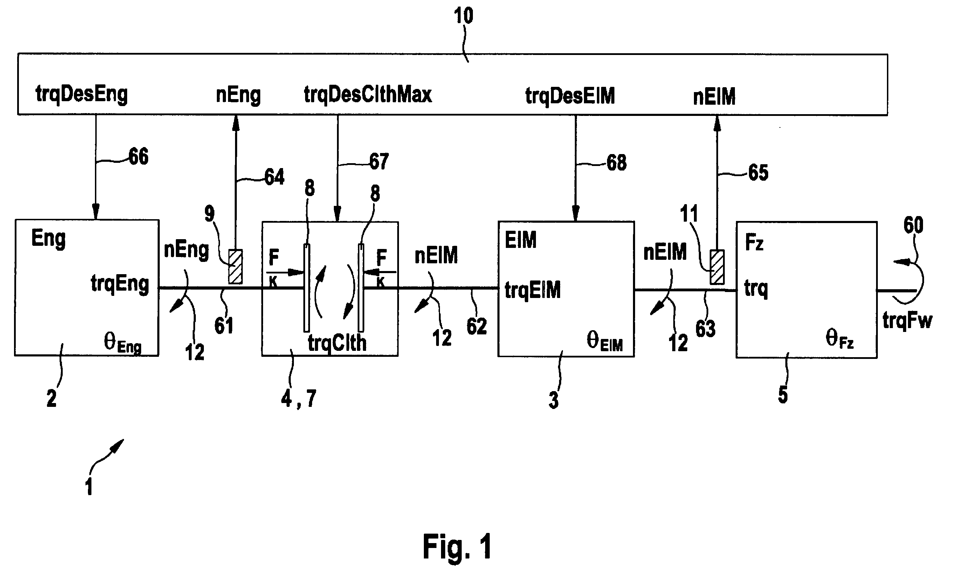

Die Figur 1 zeigt ein vereinfachtes Modell einer Hybridantriebsvorrichtung 1 mit einer Brennkraftmaschine 2, einer elektrischen Maschine 3 und einer dazwischen liegenden, mit der Brennkraftmaschine 2 über eine Welle 61 und mit der elektrischen Maschine 3 über eine Welle 62 wirkverbundenen Kupplung 4. Zudem ist die elektrische Maschine 3 über eine Welle 63 mit einem Fahrzeugabtrieb 5 verbunden. Ebenso ist möglich, dass de Brennkraftmaschine 2 und/ oder die elektrische Maschine 3 über ein Getriebe auf die Kupplung 4 wirkt. Auch eine Verkopplung über das gesamte Fahrzeug ist möglich, zum Beipsiel indem die Brennkraftmaschine 2 und die elektrische Maschine 3 auf getrennte Antriebsachsen oder getrennte Antriebsräder wirken. Die wirksamen Übersetzungen sind den bei den Drehzahlen und Drehmomenten zu berücksichtigen. Für die Brennkraftmaschine 2 wird eine Ersatzdrehmasse Eng mit einem Trägheitsmoment $\ominus_{Eng}$ angenommen. Für die elektrische Maschine wird eine Ersatzdrehmasse EIM mit einem Trägheitsmoment $\ominus_{EIM}$ angenommen. Der Fahrzeugabtrieb 5 fasst nicht dargestellte Fahrzeugkomponenten wie ein Getriebe, Räder sowie eine translatorisch bewegte Fahrzeugmasse zusammen, indem für den Fahrzeugabtrieb 5 eine Fahrzeugersatzdrehmasse Fz mit einem Trägheitsmoment $\ominus_{Fz}$ angenommen wird. Dabei sind rotatorische Trägheitsmomente einzelner Komponenten des Fahrzeugabtriebs 5 sowie die translatorisch bewegte Fahrzeugmasse anhand von Übersetzungsverhältnissen auf ihre Wirkung auf die Welle 63 umgerechnet. Die Kupplung 4 ist als Reibkupplung 7 mit Reibbelägen 8 ausgeführt. Dabei besitzt die Reibkupplung 7 eine momentenbegrenzte Wirkung. Ferner sind der Hybridantriebsvorrichtung 1 eine Steuereinrichtung 10, welches Steuersignale erzeugt, ein Drehzahlgeber 9 und ein weiterer Drehzahlgeber 11 zugeordnet. Die Wellen 61, 62 und 63 sind trägheitsmomentenfrei, wobei sich die Welle 61 mit einer Drehzahl nEng in eine Drehrichtung 12 dreht und die Wellen 62 und 63 mit einer Drehzahl nEIM in die Drehrichtung 12 drehen. Ferner erzeugt die Brennkraftmaschine 2 einen Drehmoment trqEng, welches über die Welle 61 an die Reibkupplung 7 weitergeleitet wird. Die Reibkupplung 7 überträgt ein Drehmoment trqClth, welches über die Welle 62 an die elektrische Maschine 3 weitergeleitet wird, die ihrerseits ein Drehmoment trqEIM erzeugt. Dadurch wird dem Abtrieb 5 über die Welle 63 ein Gesamtantriebsmoment trq zugeführt. An dem Kraftfahrzeug wirkende Fahrwiderstandskräfte wie Luft-, Roll- und Steigungswiderstand sind in ein auf dem Fahrzeugabtrieb 5 wirkendes Fahrwiderstandsmoment trqFw umgerechnet, welches in einer Drehrichtung 60 wirkt, die entgegengesetzt zur Drehrichtung 12 verläuft. Der Steuereinrichtung 10 werden von den Drehzahlgebern 9 und 11 die entsprechenden Drehzahlen nEng und nEIM über Pfeile 64 und 65 zugeführt. Der Brennkraftmaschine 2 wird über einen Pfeil 66 von der Steuereinrichtung 10 ein Sollmoment der Brennkraftmaschine trqDesEng über einen Pfeil 66 vorgegeben, das auf die Ersatzdrehmasse Eng in die Drehrichtung 12 wirkt. Weiterhin übermittelt die Steuereinrichtung 10 der Reibkupplung 7 über einen Pfeil 67 als Steuersignal ein maximales Haftmoment trqDesClthMax und der elektrischen Maschine 3 über einen Pfeil 68 ein Solldrehmoment der elektrischen Maschine trqDesEIM, das auf die Ersatzdrehmasse EIM in die Drehrichtung 12 wirkt. Das maximale Haftmoment trqDesClthMax, welches größer oder gleich Null ist, wird der Reibkupplung 7 von der Steuereinrichtung 10 vorgegeben und beeinflusst eine Anpresskraft $F_k$, die die Reibbeläge 8 in der Reibkupplung 7 aneinander presst. Wird das Verhalten der Reibkupplung 7 als ideal angenommen, so ist eine Reibungskraft der Kupplung proportional zur Anpresskraft $F_k$. Ist dann das aktuell über die Reibkupplung 7 übertragene Drehmoment trqClth betragsmäßig kleiner als das maximale Haftmoment trqDesClthMax, so liegt an der Reibkupplung 7 Haftreibung vor. Für Haftreibung gilt folgende Voraussetzung:

$$|trqClth| < trqDesClthMax.$$

Dabei kann das aktuell übertragene Drehmoment trqClth in beide Drehrichtungen wirken, also ein positives oder negatives Vorzeichen tragen. Die Drehzahl nEng der Brennkraftmaschine 2 entspricht dann der Drehzahl nEIM der elektrischen Maschine 3. Steigt das aktuell übertragene Drehmoment trqClth betragsmäßig auf das maximale Haftmoment trqDesClthMax an, erfolgt ein Übergang der Kupplung 4 in den Schlupf, bei dem das aktuell übertragene Drehmoment trqClth betragsmäßig dem maximalen Haftmoment trqDesClthMax entspricht. Dabei ergibt sich eine Differenzdrehzahl zwischen der Brennkraftmaschine 2 und der elektrischen Maschine 3. Die Drehmomentenübertragung ist dann auf das maximale Haftmoment trqDesClthMax begrenzt, sofern das ideale Verhalten der Reibkupplung 7 vorliegt. Das Vorzeichen des aktuell übertragenen Drehmoments trqClth hängt von dem Vorzeichen der Differenzdrehzahl ab. Es gilt dann folgender Zusammenhang für das an der Kupplung übertragene Drehmoment trqClth:

$$\text{trqClth} = \text{trqDesClthMax} \cdot \text{sign}(\text{nEng} - \text{nEIM}).$$

Die Steuereinrichtung 10 kann durch Änderung des maximalen Haftmoments trqDesClthMax den Zustand der Reibkupplung 7 beeinflussen. Bei einem rein elektrischen Fahren ist die Reibkupplung 7 vollständig geöffnet, weshalb trqDesClthMax = 0 gilt. Ein Starten der Brennkraftmaschine 2 aus dem elektrischen Fahren heraus erfolgt durch ein Schließen der Reibkupplung 7, bei drehender elektrischer Maschine 3 und zunächst stillstehender Brennkraftmaschine 2. Das maximale Haftmoment trqDesClthMax, wird dabei größer Null, wodurch ein Anschleppen der Brennkraftmaschine 2 erfolgt, sobald Verlustmomente wie Reib- und Kompressionsmomente überwunden worden sind.

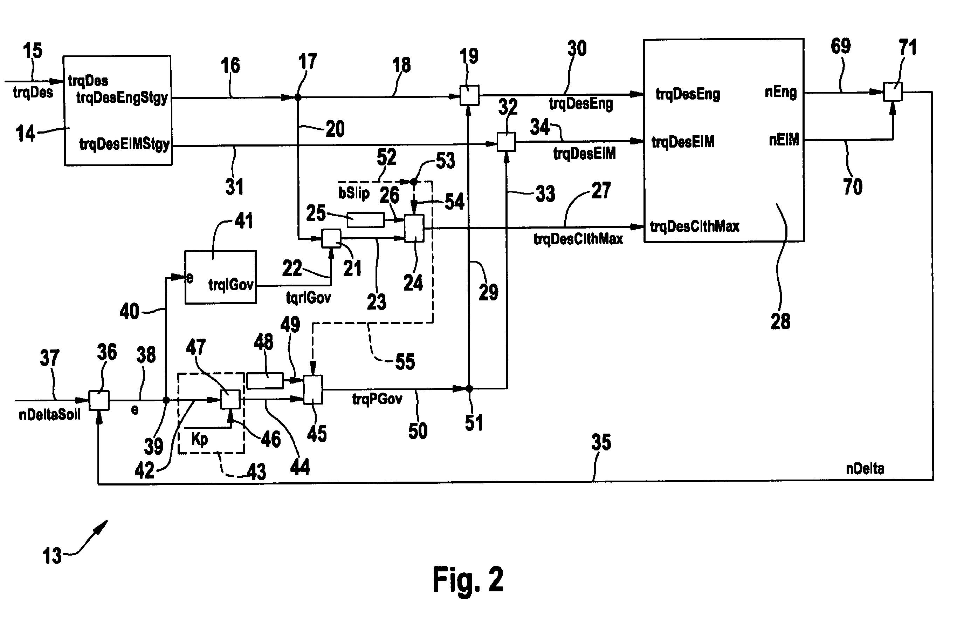

Die Figur 2 zeigt eine Berechnungsvorschrift 13 der die Signale eines Gesamtantriebssollmoments trqDes, eines binären Signals bSlip und einer Solldifferenzdrehzahl nDeltaSoll zugeführt wird. Das Gesamtantriebssollmoment trqDes wird einem Strategieblock 14 über ein Pfeil 15 zugeführt. Aus dem Strategieblock 14 werden über einen Pfeil 16 ein Strategiesollmoment für eine Brennkraftmaschine trqDesEngStgy an einen Knotenpunkt 17 und über einen Pfeil 18 an einen Summierer 19 weitergeleitet. Ausgehend von dem Knotenpunkt 17 wird das Strategiesollmoment der Brennkraftmaschine trqDesEngStgy über einen Pfeil 20 an einen Subtrahierer 21 weitergeleitet. Im Subtrahierer 21 wird weiter ein Integral-Reglermoment trqIGov über einen Pfeil 22 zugeführt. Das von dem Subtrahierer 21 ermittelte Ergebnis wird über einen Pfeil 23 an einen Umschalter 24 weitergegeben, welcher ebenfalls einen Festwert 25 über einen Pfeil 26 zugeführt bekommt. Das Ergebnis des Umschalters 24 ist ein maximales Haftmoment trqDesClthMax, welches über einen Pfeil 27 an ein Antriebsstrangmodell 28 geführt wird. Dem Summierer 19 wird über einen Pfeil 29 ein Proportional-Reglermoment trqPGov übermittelt. Das Ergebnis des Summierers 19 ist ein Solldrehmoment der Brennkraftmaschine trqDesEng und wird über einen Pfeil 30 dem Antriebsstrangmodell 28 übergeben. Der Strategieblock 14 übermittelt über einen Pfeil 31 ein Strategiesollmoment für eine elektrische Maschine trqDesEIMStgy an einen Subtrahierer 32 der über einen Pfeil 33 zusätzlich das Proportional-Reglermoment trqPGov erhält. Das Ergebnis des Subtrahierers 32 ist ein Solldrehmoment der elektrischen Maschine trqDesEIM, welches über einen Pfeil 34 dem Antriebsstrangmodell 28 zugeführt wird. Das Antriebsstrangmodell 28 errechnet aus den ihm zugeführten Größen eine Drehzahl nEng der Brennkraftmaschine 2 und eine Drehzahl nEIM der elektrischen Maschine 3. Diese werden über Pfeile 69 und 70 an einen Subtrahierer 71 geführt. Der Subtrahierer 71 errechnet eine Differenzdrehzahl nDelta, welche über einen Pfeil 35 an einen Subtrahierer 36 weitergeleitet wird. Dieser erhält zusätzlich die Solldifferenzdrehzahl nDeltaSoll über einen Pfeil 37. Ergebnis des Subtrahierers 36 ist eine Regelabweichung e, welche über einen Pfeil 38 zu einem Knotenpunkt 39 geleitet wird. Ausgehend von dem Knotenpunkt 39 verläuft ein Pfeil 40 zu einem Integralregler 41, welcher das Integral-Reglermoment trqIGov erzeugt und an den Pfeil 22 weitergibt. Ausgehend von dem Knotenpunkt 39 verläuft ein weiterer Pfeil 42 zu einem Proportionalregler 43, welcher sein Ergebnis über einen Pfeil 44 an einen Umschalter 45 weitergibt. Der Proportionalregler besteht aus einem Proportionalreglungsfaktor Kp, welcher vorbestimmt ist und über einen Pfeil 46 an einen Multiplikator 47 übermittelt wird. Dieser erhält ebenfalls die Regelabweichungen über den Pfeil 42. Der Umschalter 45 bezieht zudem einen Festwert 48 über einen Pfeil 49. Der vom Umschalter 45 bestimmte Wert ist das Proportional-Reglermoment trqPGov, welches über einen Pfeil 50 an einen Knotenpunkt 51 übergeben wird. Dieser geht in die Pfeile 29 und 33 über. Zur Steuerung der Umschalter 24 und 45 wird das binäre Signal bSlip verwendet. Über einen Pfeil 52 wird dieses an einen Knotenpunkt 53 geführt. Von dort aus verläuft das Signal bSlip über einen Pfeil 54 an den Umschalter 24 und über einen Pfeil 55 an den Umschalter 45.

Die Hybridantriebsvorrichtung 1 der Figur 1 wird in Figur 2 durch das Antriebsstrangmodell 28 symbolisiert, welches deren Komponenten enthält. Der Strategieblock 14 ist ein Momentenaufteiler, der das von einem Fahrer, einem Fahrassistenzsystem oder einem Drehzahlregler angeforderte Gesamtantriebssollmoment trqDes nach Verbrauchs- und Emissionsgesichtspunkten auf das Strategiesollmoment trqDesEngStgy für die Brennkraftmaschine 2 und das Strategiesollmoment trqDesEIMStgy für die elektrische Maschine 3 aufteilt, sodass gilt:

$$\text{trqDes} = \text{trqDesEngStgy} + \text{trqDesEIMStgy}.$$

Die Solldrehmomente trqDesEng für die Brennkraftmaschine 2 und trqDesEIM für die elektrische Maschine 3 ergeben sich aus dem jeweiligen Strategiesollmoment trqDesEngStgy und trqDesEIMStgy. Dabei wird das Strategiesollmoment trqDesEngStgy mit dem Proportional-Reglermoment trqPGov des Proportionalreglers 43 addiert, es ergibt sich das Solldrehmoment trqDesEng. Von dem Strategiesollmoment trqDesEIMStgy wird zur Erzeugung des Solldrehmoments trqDesEIM für die elektrische Maschine 3 das Proportional-Reglermoment trqPGov abgezogen. Das binäre Signal bSlip wirkt auf den Umschalter 24, der in einem Normabetriebszustand mit bslip = false das maximale Haftmoment trqDesClthMax dann auf einen Festwert 25 schaltet. Der Festwert 25 ist so groß gewählt, dass die Reibkupplung 7 im Antriebsstrangmodell 28 vollständig geschlossen wird, wodurch sie sich in einem Haftreibungsbetriebszustand befindet. Das Proportional-Reglermoment trqPGov wird im Haftreibungsbetriebszustand mit bSlip = false mittels des Umschalters 45 auf den Festwert 48 gesetzt, der 0 Nm entspricht. Die Solldrehmomente trqDesEng für die Brennkraftmaschine 2 und trqDesEIM für die elektrische Maschine 3 entsprechen dann den Strategiesollmomenten trqDesEngStgy und trqDesEIMStgy. Die Differenzdrehzahl nDelta ergibt sich innerhalb des Antriebsstrangmodells 28 aus der Drehzahl nEng der Brennkraftmaschine 2 und der Drehzahl nEIM der elektrischen Maschine 3 wie folgt:

$$nDelta = nEng - nEIM.$$

Im Haftreibungsbetriebszustand, bei vollständig geschlossener Reibkupplung 7 gilt damit entweder nEng = nEIM oder es gilt somit nDelta = 0, wodurch ein Gleichlauf beider Antriebsaggregate beschrieben ist. Ein Vergleich der Differenzdrehzahl nDelta mit der Solldifferenzdrehzahl nDeltaSoll an dem Subtrahierer 36 führt zu der Regelabweichung e mit

$$e = nDeltaSoll - nDelta.$$

Ein Übergang von einem Haftreibungsbetriebszustand mit haftender Reibkupplung 7 in einen Diagnose- und/ oder Adaptionsbetrieb mit schlupfender Reibkupplung 7 erfolgt, indem das binäre Signal bSlip = true vorgegeben wird, wodurch die Umschalter 24 und 45 entsprechend umgeschaltet werden. Die Regelabweichung e wird mit dem Proportionalregelungsfaktor Kp des Proportionalreglers 43 in dem Multiplikationspunkt 47 multipliziert und ergibt das Proportional-Reglermoment trqPGov. Daneben wird ein Integral-Reglermoment trqlGov in dem Integralregler 41 gebildet. Dieses entspricht einem zeitlichen Integral der Regelabweichung e multipliziert mit einem Integral-Verstärkungsfaktor KI. Das Integral-Reglermoment trqlGov wird während des Haftreibungsbetriebszustand auf 0 Nm initialisiert und beginnt nach einem Wechsel in den Diagnose- und/oder Adaptionsbetrieb von diesem Wert aus. Das maximale Haftmoment trqDesClthMax berechnet sich im Diagnose- und/oder Adaptionsbetrieb aus dem Strategiesollmoment trqDesEngStgy für die Brennkraftmaschine 2 abzüglich des Integral-Reglermoments trqlGov. Aus Gründen der Einfachheit wird im dargestellten Beispiel davon ausgegangen, dass das Strategiesollrnoment trqDesEngStgy für die Brennkraftmaschine 2 positiv, also größer 0 Nm und die Solldifferenzdrehzahl nDeltaSoll positiv, also größer 0 U/min ist. Bei negativem Strategiesollmoment trqDesEngStgy für die Brennkraftmaschine 2 und negativer Solldifferenzdrehzahl nDeltaSoll würde sich das maximale Haftmoment trqDesClthMax im Diagnose- und/oder Adaptionsbetrieb aus dem Betrag des Strategiesollmoments trqDesEngStgy zuzüglich des Integral-Reglermoments trqlGov berechnen. Begrenzungen für das maximale Haftmoment trqDesClthMax, das größer oder gleich 0 Nm sein muss, da die Reibkuplung 7 bei trqDesClthMax = 0 Nm vollständig geöffnet ist, sind ebenfalls nicht dargestellt. Im Diagnose- und/oder Adaptionsbetrieb wird das maximale Haftmoment trqDesClthMax mit dem Strategiesollmoment trqDesEngStgy für die Brennkraftmaschine 2 vorgesteuert. Dadurch wird die Reibkupplung 7 nahe an einer Grenze zwischen einem Haft- und Schlupfbetrieb betrieben. Die Differenzdrehzahl nDelta zwischen der Drehzahl nEng der Brennkraftmaschine 2 und der Drehzahl nEIM der elektrischen Maschine 3 wird auf die Solldifferenzdrehzahl nDeltaSoll eingeregelt. Dies erfolgt, indem nEng sowie nEIM beziehungsweise die daraus ermittelte Regelabweichung e auf das maximale Haftmoment trqDesClthMax wirken. Ist die Differenzdrehzahl nDelta gegenüber der Solldifferenzdrehzahl nDeltaSoll zu klein, so erhöht sich das Integral-Reglermoment trqlGov und das maximale Haftmoment trqDesClthMax wird zurückgenommen, wodurch sich der Schlupf an der Reibkupplung 7 und damit die Differenzdrehzahl nDelta erhöht. Eine Vorsteuerung mit dem Strategiesollmoment trqDesEngStgy für die Brennkraftmaschine 2 entlastet die Regelung und sorgt für eine gute Regelqualität auch bei einem dynamischem Betrieb, wie bei einem dynamischen Verhalten des Strategiesollmoments trqDesEngStgy.

Eine oder mehrere zusätzliche Vorsteuerung(en) für eine Kompensation von Massenträgheiten bei dynamischen Drehzahlverläufen ist/sind ebenfalls denkbar, um die Regelqualität zu erhöhen.

Das von der Reibkupplung 7 im Diagnose- und/oder Adaptionsbetrieb aktuell übertragene Drehmoment trqClth folgt dem vorgegebenen maximalen Haftmoment trqDesClthMax in der Realität meist nur ungenau und verzögert. Ferner weist es häufig ein Hystereseverhalten auf. Beides ist durch variierende Reibungskoeffizienten der Kupplungsbeläge 8, hydraulische und mechanische Ungenauigkeit der Ansteuerungsvorrichtung der Reibkupplung 7 und Signallaufzeiten begründet. Aus diesen Gründen kann die Regelqualität im Diagnose- und/oder Adaptionsbetrieb, insbesondere bei dynamischem Betrieb des Fahrzeuges weiter verbessert werden, wenn zusätzlich die Solldrehmomente trqDesEng für die Brennkraftmaschine 2 und trqDesEIM für die elektrische Maschine 3 durch die Drehzahl nEng der Brennkraftmaschine 2 und die Drehzahl nEIM der elektrischen Maschine 3 beeinflusst werden. Dies erfolgt mit dem Proportional-Reglermoment trqPGov, während das Integral-Reglermoment trqIGov auf das maximale Haftmoment trqDesClthMax der Reibkupplung 7 wirkt und Ungenauigkeit in der Ansteuerungsvorrichtung der Reibkupplung 7 ausgleicht. Das Proportional-Reglermoment trqPGov wird mit unterschiedlichen Vorzeichen auf die Solldrehmomente trqDesEng für die Brennkraftmaschine 2 und trqDesEIM für die elektrische Maschine 3 aufgeschaltet. Das hat den Vorteil, dass Reglereingriffe keinen Einfluss auf ein Gesamtantriebsmoment trq haben, welches von dem Getriebe 5 an die Antriebsräder weitergegeben wird. Daraus ergibt sich ein hoher Fahrkomfort. Insbesondere ergibt sich der hohe Fahrkomfort dann, wenn die Reibkupplung 7 bei einer steigenden Flanke des binären Signals bSlip nicht sofort in den Schlupf gelangt, was infolge der Ungenauigkeiten möglich ist, und dies durch das Integral-Reglermoment trqIGov kompensiert wird, was mit einem zeitlich verzögerten Übergang in den Schlupf verbunden ist. Vor diesem Übergang entspricht die Summe der Sollmomente trqDesEng und trqDesEIM weiterhin dem Gesamtantriebssollmoment trqDes, da das Proportional-Reglermoment trqPGov sich durch die unterschiedlichen Vorzeichen aufhebt. In der Berechnungsvorschrift 13 gilt deshalb:

$$
\begin{aligned}
trqDesEng + trqDesEIM = \\
trqDesEngStgy + trqPGov + trqDesEIMStgy - trqPGov = \\
trqDes
\end{aligned}
$$

Das Gesamtantriebssollmoment trqDes wird unverändert beibehalten und an die Antriebsräder weitergegeben. Aus demselben Grund gilt bei einem stationären Betrieb des Antriebs die Impulserhaltung für den Übergang in den Schlupf. Im stationären Betrieb heben sich die äußeren am System angreifenden Drehmomente in Summe auf, da der Fahrer mit dem Gesamtantriebssollmoment trqDes ein Fahrzeugwiderstandsmoment trqFw ausgleicht. In dem Antriebsstrangmodell 28 gilt deshalb:

$$
trqFw = trqDes = trqDesEng + trqDesEIM.
$$

Die Änderungen der Drehzahlen nEng und nEIM beim Übergang in den Schlupfbetrieb verhalten sich entsprechend den Trägheitsmomenten

$$
\Theta_{Ers} = (\Theta_{Fz} + \Theta_{EIM}) \text{ und } \Theta_{Eng}.
$$

Bei Bedarf kann eine Änderung der Drehzahl nEIM an der elektrischen Maschine 3 und damit der Antriebsräder aufgrund der eindeutig bestimmten Zusammenhänge über die Trägheitsmomente mittels einer Vorsteuerung verhindert werden, was ebenfalls den Fahrkomfort erhöht. Die in der Berechnungsvorschrift 13 gewählte Reglerstruktur ist eine mögliche Ausführungsform; bei anderen Reibkupplungen mit schaltendem Verhalten kann beispielsweise zusätzlich ein schaltender Regleranteil eingesetzt werden.

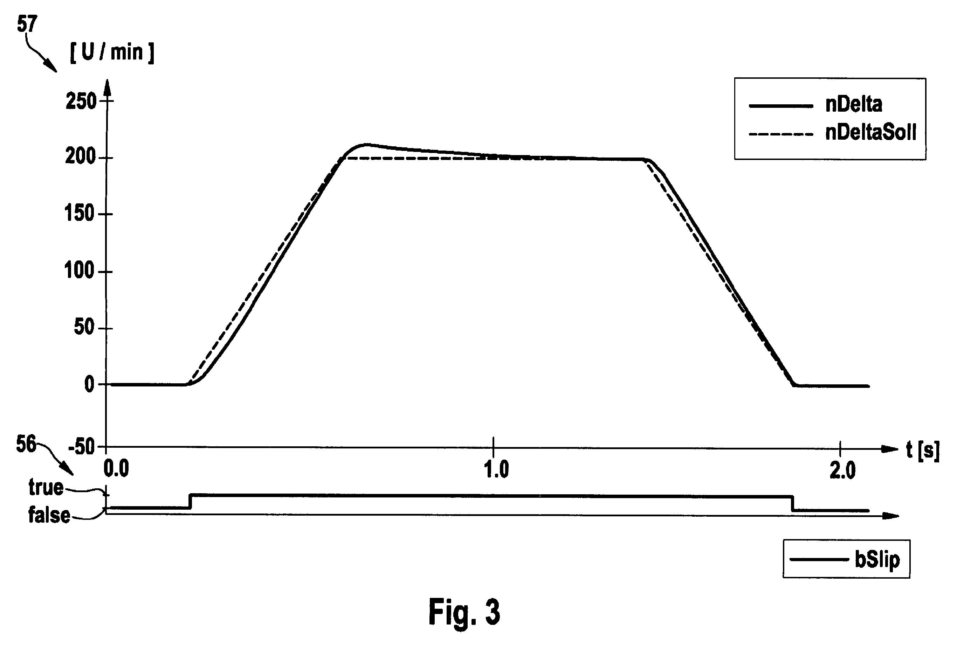

Die Figuren 3 bis 6 zeigen Ergebnisse der Berechnungsvorschrift 13 der Figur 2. Während der gesamten Berechnung ist ein konstantes Gesamtantriebssollmoment trqDes vorgesehen, das von dem Strategieblock 14 konstant auf das Strategiesollmoment trqDesEngStgy für die Brennkraftmaschine 2 und trqDesEIMStgy für die elektrische Maschine 3 aufgeteilt wird. Das Fahrwiderstandsmoment trqFw entspricht dem Gesamtantriebssollmoment trqDes, wodurch ein stationärer Betrieb vorliegt. Die Figur 3 zeigt einen zeitlichen Verlauf des binären Signals bSlip in einem Koordinatensystem 56. Ferner werden in einem kartesischen Koordinatensystem 57 zeitliche Verläufe der von der Steuereinrichtung 10 rampenförmig zwischen einem Minimum nDeltaSollMin bei 0 U/min und einem Maximum nDeltaSollMax bei 200 U/min vorgegebenen Solldifferenzdrehzahl nDeltaSoll und der eingeregelten Differenzdrehzahl nDelta gezeigt. Hierbei ist nDelta gestrichelt dargestellt.

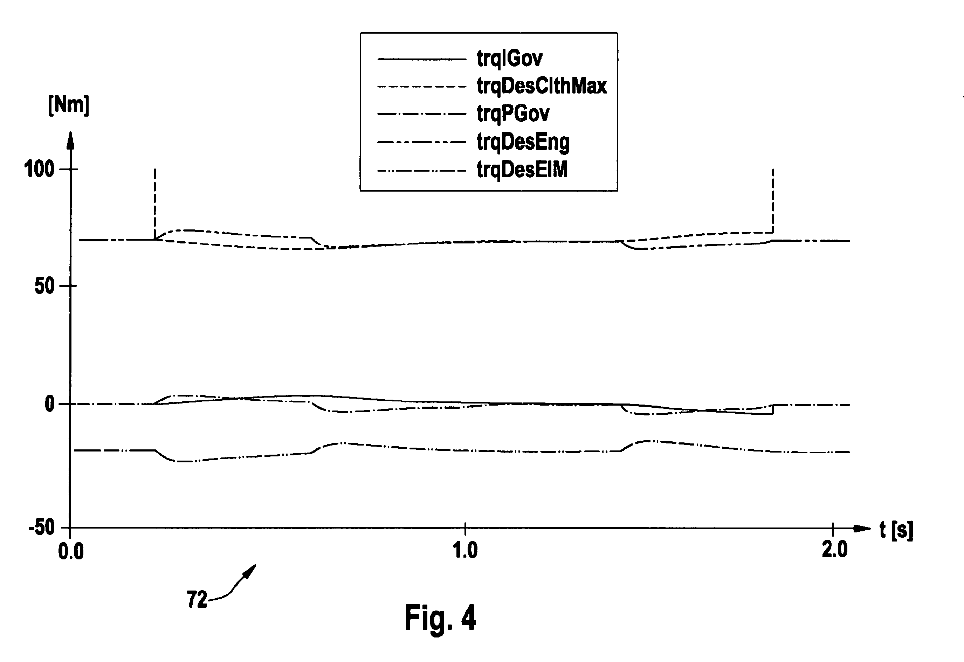

Die Figur 4 zeigt in einem Koordinatensystem 72 zeitliche Verläufe der berechneten Drehmomente trqDesEng, trqDesEIM, trqlGov, trqPGov und trqDesClthMax. Dabei zeigen sich die Änderungen an den Drehmomenten zum Zeitpunkt der Umschaltung des binären Signals bSlip sehr deutlich.

Während des dargestellten Zeitbereiches wird ein Gesamtsollmoment von

$$trqDes = 50 \text{ Nm,}$$

vorgegeben, das vom Strategienblock 14 konstant auf das Strategiesollmoment für die Brennkraftmaschine 2

$$trqDesEngStgy = 70 \text{ Nm}$$

und für die elektrische Maschine 3

$$trqDesEIMStgy = -20 \text{ Nm}$$

aufgeteilt wird.

Das Fahrwiderstandsmoment

$$trqFw = 50 \text{ Nm}$$

entspricht dem Gesamtantriebssollmoment trqDes, damit liegt ein stationärer Betrieb des Fahrzeugs bei konstanter Fahrzeuggeschwindigkeit vor.

Zu Beginn des dargestellten Zeitbereiches ist das binäre Signal bSlip = false. Der Festwert 25 gibt ein hohes maximales Haftmoment trqDesClthMax vor, wodurch die Reibkupplung 7 im Antriebsstrangmodell 28 vollständig geschlossen ist. Das Proportional-Reglermoment trqPGov und das Integral-Reglermoment trqlGov sind gleich Null. Das Solldrehmoment trqDesEng entspricht damit dem Strategiesollmoment trqDesEngStgy, das Solldrehmoment trqDesEIM entspricht dem Strategiesollmoment trqDesEIMStgy. Es liegt ein Haftreibungsbetriebszustand vor, denn die Drehzahl nEng der Brennkraftmaschine 2 entspricht der Drehzahl nEIM der elektrischen Maschine 3.

Zum Zeitpunkt t = 0,2 Sekunden erfolgt mit der Vorgabe bSlip = true ein Übergang in den Diagnose- und/oder Adaptionsbetrieb. Durch Reduzierung des maximalen Haftmoments trqDesClthMax gelangt die Reibkupplung 7 in den Schlupf. Zum Zeitpunkt t = 0.2 Sekunden beginnt auch die vorgegebene Solldifferenzdrehzahl nDeltaSoll anzusteigen. Der Regler sorgt durch Eingriff in die Stellgrößen trqDesClthMax, trqDesEng und trqDesEIM, dass die Differenzdrehzahl nDelta der Solldifferenzdrehzahl nDeltaSoll mit geringer Abweichung folgt.

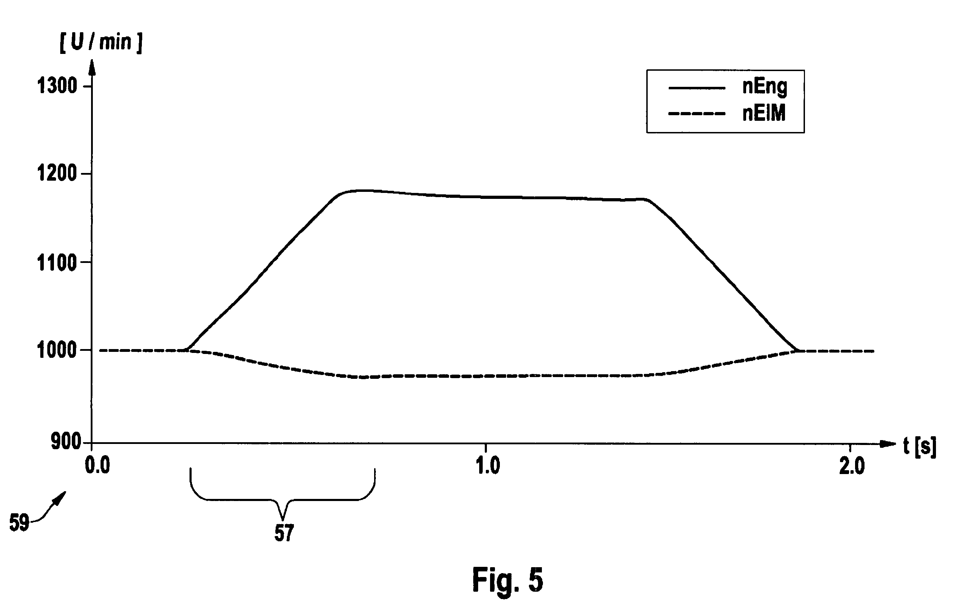

Die Figur 5 zeigt zeitliche Verläufe der Drehzahlen nEng und nEIM in einem kartesischen Koordinatensystem 59 in Umdrehungen pro Minute (U/min). Die Drehzahlen nEng und nEIM ändern sich wie bereits erwähnt entsprechend den Trägheitsverhältnissen aufgrund des Impulserhaltungssatzes. Insbesondere zeigt sich ein Drehzahleinbruch 57 der Drehzahl nEIM nach Umschaltung des binären Schlupfsignals bSlip.

Das Solldrehmoment trqDesEng der Brennkraftmaschine 2 ist für den dargestellten Zeitraum positiv. Beim Übergang der Reibkupplung 7 in den Schlupf steigt die Drehzahl nEng der Brennkraftmaschine 2 gegenüber der Drehzahl nEIM der elektrischen Maschine 3 an. Damit ist nachgewiesen, dass die Brennkraftmaschine 2 ein positives Drehmoment erzeugt. Würde die Brennkraftmaschine 2 ein negatives Drehmoment erzeugen, zum Beispiel ein Verlustmoment durch nicht erfolgende Verbrennungen aufgrund eines Fehlers der Brennkraftmaschine 2, dann ergäbe sich ein Abfall der Drehzahl nEng der Brennkraftmaschine 2 gegenüber der Drehzahl nEIM der elektrischen Maschine 3 beim Übergang der Reibkupplung 7 in den Schlupf. Die elektrische Maschine 3 würde die Brennkraftmachine 2 mitschleppen.

Erfolgen wechselweise einige Verbrennungen korrekt und andere nicht korrekt, zum Beispiel bei Zündaussetzern, so führt dies zu einem ungleichförmigen Drehmoment der Brennkraftmaschine 2 und damit zu Ungleichförmigkeiten im Verlauf der Drehzahl nEng der Brennkraftmaschine 2. Diese Drehzahlungleichförmigkeiten sind bei schlupfender Reibkupplung 7 stark ausgeprägt, da die Brennkraftmaschine 2 bei Schlupf von den Trägheiten des restlichen Hybridantriebsstanges 1 und damit vom Fahrzeugabtrieb abgekoppelt ist. Entsprechende Algorithmen zur Erkennung von Aussetzern durch Auswertung der Drehzahl nEng der Brennkraftmaschine 2 sind in modernen Motorsteuerungen vorhanden. Anhand eines gleichmäßigen, nicht mit einer Welligkeit überlagerten Verlaufes der Drehzahl nEng der Brennkraftmaschine 2 wie in Figur 5 ist eine korrekte Verbrennung in allen Zylindern der Brennkraftmaschine 2 nachgewiesen.

Mittels Auswertung - Diagnose - der Drehzahl nEng der Brennkraftmaschine 2 im Diagnose- und/oder Adaptionsbetrieb lässt sich ein korrekter Betrieb beziehungsweise eine fehlerfreie Verbrennung der Brennkraftmaschine 2 nachweisen. Insbesondere nach einem erfolgten Start der Brennkraftmaschine 2 ist diese Nachweismöglichkeit wertvoll, da Drehmomente aus Kostengründen meist nicht gemessen werden und andere Nachweisverfahren nur begrenzt aussagekräftig sind.

Durch Modulation der Solldifferenzdrehzahl nDeltaSoll, zum Beispiel, indem im Diagnose- und/oder Adaptionsbetrieb ein sinusförmiger zeitlicher Verlauf für die Solldifferenzdrehzahl nDeltaSoll als Anregung beziehungsweise Testsignal für die Regelung vorgegeben wird, lässt sich durch Auswertung der entstehenden Signalverläufe die Qualität der Aussagen verbessern.

Das von der Brennkraftmaschine 2 real erzeugte Drehmoment entspricht bei konstanter Drehzahl nEng dem von der Reibkupplung aktuell übertragenen Drehmoment trqClth. Durch Vergleich des Solldrehmoments trqDesEng der Brennkraftmaschine 2 mit dem vorgegebenen maximalen Haftmoment trqDesClthMax der Reibkupplung 7 können im Diagnose- und/oder Adaptionsbetrieb Ungenauigkeiten in den Ansteuerungen der Brennkraftmaschine 2 und der Reibkupplung 7 ermittelt werden. Geht man davon aus, dass das von der Brennkraftmaschine 2 real erzeugte Drehmoment näherungsweise dem Solldrehmoment trqDesEng entspricht, so gleicht das Integral-Reglermoment trqIGov Abweichungen des im Schlupf der Reibkupplung 7 aktuell übertragenen Drehmoments trqClth vom vorgegebenen maximalen Haftmoment trqDesClthMax aus. Das Integral-Reglermoment trqIGov ist somit ein Maß für Ungenauigkeiten in der Ansteuerung der Reibkupplung 7 und kann für Adaptionen beziehungsweise Korrekturen der Ansteuerung benutzt werden.

Die Genauigkeit der Adaptionen hängt von der Genauigkeit in der Ansteuerung der Brennkraftmaschine 2 ab. Die Ansteuerung der Brennkraftmaschine 2 kann zum Beispiel bei offener Reibkupplung 7 oder durch Vergleich der Solldrehmomente trqDesEIM und trqDesEng bei nicht vorhandenem Kraftschluss zu den Antriebsrädern adaptiert werden.

Im dynamischen Betrieb, das heißt bei sich über der Zeit ändernden Drehzahlen können sämtliche Adaptionen verbessert werden, indem Trägheiten und zur Beschleunigung erforderliche Drehmomentanteile berücksichtigt werden. Daneben ist eine Korrektur der Drehzahlen nEng und/oder nEIM vorteilhaft, um Zeitverzögerungen in den Drehzahlerfassungen oder Signalübertragungen zu kompensieren.

Durch eine Modulation der Solldifferenzdrehzahl nDeltaSoll, zum Beispiel einem sinusförmigen zeitlichen Verlauf und Beobachtung der Signalverläufe lässt sich im Diagnose- und/oder Adaptionsbetrieb das Hystereseverhalten in der Ansteuerung der Kupplung, zum Beispiel ein unterschiedliches Verhalten beim Öffnen und Schließen, bestimmen.

In der Figur 4 wird das Integral-Reglermoment trqIGov nahezu 0 Nm, sobald die Drehzahlen eine geringe Dynamik aufweisen, was auf geringe Ungenauigkeiten in der Ansteuerung der Reibkupplung 7 schließen lässt. Eine Korrektur beziehungsweise Adaption der Ansteuerung der Reibkupplung 7 ist nicht erforderlich. Andernfalls müsste die Ansteuerung der Reibkupplung 7 so korrigiert beziehungsweise adaptiert werden, dass das Integral-Reglermoment trqIGov nahezu 0 Nm wird

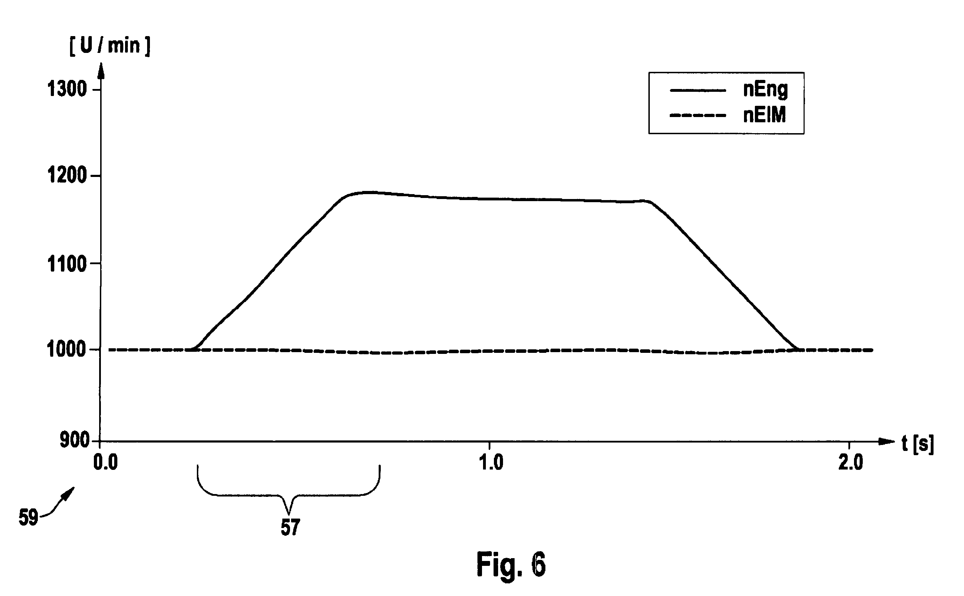

Die Figur 6 zeigt zeitliche Verläufe der Drehzahlen nEng und nEIM in einem kartesischen Koordinatensystem 59 bei einer zusätzlichen Aufschaltung eines Vorsteuermoments trqPreEIM auf das Solldrehmoment trqDesEIM für die elektrische Maschine 3, wobei gilt:

$$\text{trqPreEIM} = \Theta_{Eng} \cdot \frac{\pi}{30\, U/\min} \cdot d/dt(\text{nDeltaSoll}).$$

Ein Vergleich der Figuren 5 und 6 zeigt, dass der Drehzahleinbruch 57 der elektrischen Maschine 3 aus Figur 5 in Figur 6 nicht vorliegt. Die Drehzahl nEIM an der elektrischen Maschine 3 und damit die Drehzahl an der Fahrzeugersatzdrehmasse Fz, die eine Fahrzeuggeschwindigkeit repräsentiert, ändert sich nicht. Es erfolgen ruckfreie Übergänge von und zum Diagnose-und/oder Adaptionsbetrieb, verbunden mit hohem Fahrkomfort.

Bei Kraftfahrzeugen mit einem Drehmomentenwandler kann das Beeinflussen und/oder Öffnen einer Wandlerüberbrückungskupplung, zumindest für die Übergänge von und zu einem Diagnose- und/oder Adaptionsbetrieb, ebenfalls zur Erhöhung des Fahrkomforts eingesetzt werden.

**EP 2 268 522 B1**

**Patentansprüche**

1. Verfahren zum Betreiben einer Hybriddurchantriebsvorrichtung eines Kraftfahrzeugs, die zumindest zwei unterschiedliche Antriebsaggregate, insbesondere eine elektrische Maschine und eine Brennkraftmaschine, und eine Kupplung aufweist, wobei die Antriebsaggregate mittels der Kupplung wirkverbindbar sind, **dadurch gekennzeichnet, dass** die Kupplung (4) in einem Diagnosebetrieb zur Erkennung eines fehlerfreien Betriebes der Antriebsaggregate durch Überwachung vonderen Drehzahl und/oder Adaptionsbetrieb zur Vorgabe einer qualitativen Drehmomenterzeugung der Antriebsaggregate mit einem Schlupf betrieben wird.

2. Verfahren nach Anspruch 1, **dadurch gekennzeichnet, dass** der Schlupf gesteuert und/oder geregelt wird.

3. Verfahren nach einem der vorhergehenden Ansprüche, **dadurch gekennzeichnet, dass** der Schlupf mittels der Vorgabe eines maximalen Haftmoments der Kupplung und/oder eines Solldrehmoments mindestens eines der Antriebsaggregate gesteuert und/oder geregelt wird.

4. Verfahren nach einem der vorhergehenden Ansprüche, **dadurch gekennzeichnet, dass** der Schlupf mittels einer Drehzahl von mindestens einem der Antriebsaggregate (2,3) gesteuert und/oder geregelt wird.

5. Verfahren nach einem der vorhergehenden Ansprüche, **dadurch gekennzeichnet, dass** jedes der Antriebsaggregate (2,3) ein Drehmoment erzeugt.

6. Verfahren nach einem der vorhergehenden Ansprüche, **dadurch gekennzeichnet, dass** eine Diagnose und/oder Adaption anhand der Drehzahl von mindestens einem der Antriebsaggregate, anhand der Differenzdrehzahl an der Kupplung und/oder anhand des Schlupfes erfolgt.

7. Verfahren nach einem der vorhergehenden Ansprüche, **dadurch gekennzeichnet, dass** eine Diagnose und/oder Adaption einer Drehmomenterzeugung eines der Antriebsaggregate (2,3) anhand einer Drehzahländerung des Antriebsaggregats (2,3) erfolgt.

8. Verfahren nach einem der vorhergehenden Ansprüche, **dadurch gekennzeichnet, dass** für eine Diagnose eines Startvorgangs eines der Antriebsaggregate (2,3) durch das während der Diagnose erkannte und/oder ermittelte Drehmoment des Antriebsaggregats (2,3) verwendet wird.

9. Verfahren nach einem der vorhergehenden Ansprüche, **dadurch gekennzeichnet, dass** ein Ende des Startvorgangs eines der Antriebsaggregate (2,3) anhand des erkannten und/oder ermittelten Drehmoments detektiert wird.

10. Verfahren nach einem der vorhergehenden Ansprüche, **dadurch gekennzeichnet, dass** in einem Diagnose- und/oder Adaptionsbetrieb dynamische Massenkräfte mindestens einer der Antriebsaggregate und/oder der Kupplung ausgeglichen werden.

11. Verfahren nach einem der vorhergehenden Ansprüche, **dadurch gekennzeichnet, dass** auf Basis des Schlupfs und des maximalen Haftmoments das Drehmoment von mindestens einem der Antriebsaggregate (2,3) gesteuert und/oder geregelt wird.

12. Verfahren nach einem der vorhergehenden Ansprüche, **dadurch gekennzeichnet, dass** die Drehmomente der Antriebsaggregate (2,3) zu einem Gesamtantriebsmoment zusammengeführt werden, welches an den Antriebsrädern des Kraftfahrzeugs wirkt.

13. Verfahren nach einem der vorhergehenden Ansprüche, **dadurch gekennzeichnet, dass** bei einem Übergang der Kupplung (4) in oder aus dem Diagnose- und/oder Adaptionsbetrieb das Gesamtantriebsmoment erhalten bleibt.

14. Verfahren nach einem der vorhergehenden Ansprüche, **dadurch gekennzeichnet, dass** die Kupplung in einem Normalbetrieb der Hybridantriebsvorrichtung (1) in einem Diagnose- und/oder Adaptionsbetrieb betrieben wird.

15. Hybridantriebsvorrichtung eines Kraftfahrzeugs, insbesondere zur Durchführung des Verfahrens nach einem oder mehreren vorhergehenden Ansprüchen, die zumindest zwei unterschiedliche Antriebsaggregate, insbesondere eine elektrische Maschine und eine Brennkraftmaschine, und eine Kupplung aufweist, wobei die Antriebsaggregate mittels der Kupplung wirkverbindbar sind, **dadurch gekennzeichnet, dass** die Kupplung (4) in einem Diagnosebetrieb zur Erkennung eines fehlerfreien Betriebes der Antriebsaggregate durch Überwachung vonderen Drehzahl und/oder Adaptionsbetrieb zur Vorgabe einer qualitativen Drehmomenterzeugung der Antriebsaggregate eine Schlupfkupplung bildet.

16. Steuereinrichtung für eine Hybridantriebsvorrichtung eines Kraftfahrzeugs, insbesondere zur Durchführung des Verfahrens nach einem oder mehreren vorhergehenden Ansprüchen, wobei die Hybridantriebsvorrichtung zumindest zwei unterschiedliche Antriebsaggregate, insbesondere eine elektrische Maschine und eine Brennkraftmaschine, sowie eine mittels von der Steuereinrichtung gelieferten Steuersignalen betätigte Kupplung aufweist, und die Antriebsaggregate mittels der Kupplung wirkverbindbar sind, **dadurch gekennzeichnet, dass** die Steuereinrichtung (10) derart ausgebildet ist, dass sie in einem Diagnosebetrieb zur Erkennung eines fehlerfreien Betriebes der Antriebsaggregate durch Überwachung vonderen Drehzahl und/oder Adaptionsbetrieb zur Vorgabe einer qualitativen Drehmomenterzeugung der Antriebsaggregate Steuersignale zum Betreiben der Kupplung (4) in einem Schlupfbetrieb erzeugt.

17. Kraftfahrzeugaggregat mit einer Steuereinrichtung (10) und einer Hybridantriebsvorrichtung (1) nach Anspruch 16.


**Claims**

1. Method for operating a hybrid drive device of a motor vehicle, which hybrid drive device has at least two different drive units, in particular an electric machine and an internal combustion engine, and a clutch, wherein the drive units can be operatively connected by means of a clutch, **characterized in that** the clutch (4) is operated with slip in a diagnostical mode for detecting fault-free operation of the drive units by monitoring the rotational speed thereof and/or in an adaptation mode for predefining a qualitative generation of torque by the drive units.

2. Method according to Claim 1, **characterized in that** open-loop and/or closed-loop control is performed with the slip.

3. Method according to one of the preceding claims, **characterized in that** open-loop and/or closed-loop control is performed on the slip by predefining a maximum stiction torque of the clutch and/or a set point torque of at least one of the drive units.

4. Method according to one of the preceding claims, **characterized in that** open-loop and/or closed-loop control of the slip is performed by means of a rotational speed of at least one of the drive units (2, 3).

5. Method according to one of the preceding claims, **characterized in that** each of the drive units (2, 3) generates a torque.

6. Method according to one of the preceding claims, **characterized in that** diagnostics and/or adaptation are performed on the basis of the rotational speed of at least one of the drive units, on the basis of the differential rotational speed at the clutch and/or on the basis of the slip.

7. Method according to one of the preceding claims, **characterized in that** diagnostics and/or adaptation of a generation of torque by one of the drive units (2, 3) are performed on the basis of a change in rotational speed of the drive units (2, 3).

8. Method according to one of the preceding claims, **characterized in that** one of the drive units (2, 3) is used for diagnosing a starting process by means of the torque of the drive unit (2, 3) which is detected and/or determined during the diagnosis.

9. Method according to one of the preceding claims, **characterized in that** an end of the starting process of one of the drive units (2, 3) is detected on the basis of the detected and/or determined torque.

10. Method according to one of the preceding claims, **characterized in that** in a diagnostic mode and/or adaptation mode dynamic inertia forces of at least one of the drive units and/or of the clutch are balanced.

11. Method according to one of the preceding claims, **characterized in that** open-loop and/or closed-loop control of the torque of at least one of the drive units (2, 3) is performed on the basis of the slip and the maximum stiction torque.

**12.** Method according to one of the preceding claims, **characterized in that** the torques of the drive units (2, 3) are combined to form a composite drive torque which acts at the drive wheels of the motor vehicle.

**13.** Method according to one of the preceding claims, **characterized in that** at a changeover of the clutch (4) into or out of the diagnostic mode and/or adaptation mode the composite drive torque is maintained.

**14.** Method according to one of the preceding claims, **characterized in that** in a normal mode of the hybrid drive device (1) the clutch is operated in a diagnostic mode and/or adaptation mode.

**15.** Hybrid drive device of a motor vehicle, in particular for carrying out the method according to one or more of the preceding claims, which has at least two different drive units, in particular an electric machine and an internal combustion engine and a clutch, wherein the drive units can be operatively connected by means of the clutch, **characterized in that** the clutch (4) forms a slip clutch in a diagnostic mode for detecting fault-free operation of the drive units by monitoring the rotational speed thereof and/or adaptation mode for predefining a qualitative generation of torque of the drive units.

**16.** Control device for a hybrid drive device for a motor vehicle, in particular for carrying out the method according to one or more of the preceding claims, wherein the hybrid drive device has at least two different drive units, in particular an electric machine and an internal combustion engine, and a clutch which is activated by means of control signals supplied by the control device, and the drive units can be operatively connected by means of the clutch **characterized in that**, in a diagnostic mode for detecting fault-free operation of the drive units by monitoring the rotational speed thereof and/or adaptation mode for predefining a qualitative generation of torque of the drive units, the control device (10) generates control signals for operating the clutch (4) in a slip mode.

**17.** Motor vehicle unit having a control device (10) and a hybrid drive device (1) according to Claim 16.

**Revendications**

**1.** Procédé pour faire fonctionner un dispositif propulseur hybride d'un véhicule automobile comportant au moins deux groupes propulseurs différents, notamment un moteur électrique et un moteur à combustion interne, ainsi qu'un embrayage, les groupes propulseurs pouvant être amenés en liaison active par le biais de l'embrayage, **caractérisé en ce que** l'embrayage (4) fonctionne dans un mode de fonctionnement de diagnostic pour détecter un fonctionnement exempt d'anomalie des groupes propulseurs par surveillance de leur vitesse de rotation et/ou dans un mode de fonctionnement d'adaptation à la consigne de production d'un couple de rotation qualitatif des groupes propulseurs avec un certain patinage.

**2.** Procédé selon la revendication 1, **caractérisé en ce que** le patinage est commandé et/ou réglé.

**3.** Procédé selon l'une quelconque des revendications précédentes, **caractérisé en ce que** le patinage est commandé et/ou réglé à l'aide de la consigne d'un couple d'adhérence maximal de l'embrayage et/ou d'un couple théorique de rotation d'au moins un des groupes propulseurs.

**4.** Procédé selon l'une quelconque des revendications précédentes, **caractérisé en ce que** le patinage est commandé et/ou réglé à l'aide d'une vitesse de rotation d'au moins un des groupes propulseurs (2, 3).

**5.** Procédé selon l'une quelconque des revendications précédentes, **caractérisé en ce que** chacun des groupes propulseurs (2, 3) produit un couple de rotation.

**6.** Procédé selon l'une quelconque des revendications précédentes, **caractérisé en ce qu'**un diagnostic et/ou une adaptation sont réalisés à l'aide de la vitesse de rotation d'au moins un des groupes propulseurs, à l'aide du différentiel de vitesses de rotation au niveau de l'embrayage et/ou à l'aide du patinage.

**7.** Procédé selon l'une quelconque des revendications précédentes, **caractérisé en ce qu'**un diagnostic et/ou une adaptation d'une production de couple de rotation d'un des groupes propulseurs (2, 3) sont réalisés à l'aide d'une variation de vitesse de rotation du groupe propulseur (2, 3).

**8.** Procédé selon l'une quelconque des revendications précédentes, **caractérisé en ce qu'**un couple de rotation, détecté et/ou calculé pendant le diagnostic, du groupe propulseur (2, 3) est utilisé pour réaliser un diagnostic d'un processus de démarrage d'un des groupes propulseurs (2, 3).

9. Procédé selon l'une quelconque des revendications précédentes, **caractérisé en ce qu'**une fin d'un processus de démarrage d'un des groupes propulseurs (2, 3) est détectée à l'aide du couple de rotation détecté et/ou calculé.

10. Procédé selon l'une quelconque des revendications précédentes, **caractérisé en ce que** dans un mode de fonctionnement de diagnostic et/ou d'adaptation, les forces de masse dynamiques d'au moins un des groupes propulseurs et/ou de l'embrayage sont équilibrées.

11. Procédé selon l'une quelconque des revendications précédentes, **caractérisé en ce que** le couple de rotation d'au moins un des groupes propulseurs (2, 3) est commandé et/ou réglé sur la base du patinage et du couple d'adhérence maximal.

12. Procédé selon l'une quelconque des revendications précédentes, **caractérisé en ce que** les couples de rotation des groupes propulseurs (2, 3) sont regroupés en un couple d'entraînement total agissant sur les roues motrices du véhicule automobile.

13. Procédé selon l'une quelconque des revendications précédentes, **caractérisé en ce que** le couple d'entraînement total est maintenu en présence d'une transition de l'embrayage (4) dans le mode de fonctionnement de diagnostic et/ou d'adaptation ou hors de celui-ci.

14. Procédé selon l'une quelconque des revendications précédentes, **caractérisé en ce que** l'embrayage est entraîné dans un mode de fonctionnement normal du dispositif propulseur hybride (1), dans un mode de fonctionnement de diagnostic et/ou d'adaptation.

15. Dispositif propulseur hybride d'un véhicule automobile, notamment pour la mise en oeuvre du procédé selon l'une quelconque des revendications précédentes ou plusieurs d'entre elles, comportant au moins deux groupes propulseurs différents, notamment un moteur électrique et un moteur à combustion interne, ainsi qu'un embrayage, les groupes propulseurs pouvant être amenés en liaison active par le biais de l'embrayage, **caractérisé en ce que** l'embrayage (4) forme un couple de patinage dans un mode de fonctionnement de diagnostic servant à détecter un fonctionnement exempt d'anomalie des groupes propulseurs par surveillance de leur vitesse de rotation et/ou dans un mode de fonctionnement d'adaptation à la consigne de production d'un couple de rotation qualitatif des groupes propulseurs.

16. Dispositif de commande conçu pour un dispositif propulseur hybride d'un véhicule automobile, notamment pour la mise en oeuvre du procédé selon l'une quelconque des revendications précédentes ou plusieurs d'entre elles, le dispositif propulseur hybride comportant au moins deux groupes propulseurs différents, notamment un moteur électrique et un moteur à combustion interne, ainsi qu'un embrayage actionné par le biais des signaux de commande envoyés par le dispositif de commande, et les groupes propulseurs pouvant être amenés en liaison active par le biais de l'embrayage, **caractérisé en ce que** le dispositif de commande (10) est réalisé de telle sorte qu'il émet, dans un mode de fonctionnement de diagnostic servant à détecter un fonctionnement exempt d'anomalie des groupes propulseurs par surveillance de leur vitesse de rotation et/ou dans un mode de fonctionnement d'adaptation à la consigne de production d'un couple de rotation qualitatif des groupes propulseurs, des signaux de commande servant à faire fonctionner l'embrayage (4) dans un mode de fonctionnement de patinage.

17. Groupe de véhicule automobile équipé d'un dispositif de commande (10) et d'un dispositif propulseur hybride (1) selon la revendication 16.

Fig. 1

EP 2 268 522 B1

Fig. 2

EP 2 268 522 B1

16

**Fig. 3**

EP 2 268 522 B1

Fig. 4

EP 2 268 522 B1

**Fig. 5**

EP 2 268 522 B1

**Fig. 6**

EP 2 268 522 B1

**IN DER BESCHREIBUNG AUFGEFÜHRTE DOKUMENTE**

**In der Beschreibung aufgeführte Patentdokumente**

- DE 19721298 A
- DE 19915207 A
- DE 10053110 A